# EUROPÄISCHE PATENTSCHRIFT

(11) **EP 3 084 022 B1**
(45) Veröffentlichungstag und Bekanntmachung des Hinweises auf die Patenterteilung: **18.11.2020**
(21) Anmeldenummer: 14823927.0
(22) Anmeldetag: 12.12.2014
(51) Int. Cl.: C22B 3/02, C22B 3/18

(54) **VORRICHTUNG UND VERFAHREN ZUR GEWINNUNG VON 2- UND 3-WERTIGEN METALLIONEN AUS PRIMÄREN UND SEKUNDÄREN ROHSTOFFEN MIT HILFE VON MIKROBIELLEN METABOLITEN**
DEVICE AND METHOD FOR OBTAINING 2-AND 3-VALENT METAL IONS FROM PRIMARY AND SECONDARY RAW MATERIALS WITH THE AID OF MICROBIAL METABOLITES
DISPOSITIF ET PROCÉDÉ POUR PRODUIRE DES IONS MÉTALLIQUES BIVALENTS ET TRIVALENTS À PARTIR DE MATIÈRES BRUTES PRIMAIRES ET SECONDAIRES AU MOYEN DE MÉTABOLITES MICROBIENS

(30) Priorität: 16.12.2013 DE 102013226042
(43) Veröffentlichungstag der Anmeldung: 26.10.2016
(73) Patentinhaber: Helmholtz-Zentrum Dresden - Rossendorf e.V., 01328 Dresden (DE)
(72) Erfinder: KUTSCHKE, Sabine, 01277 Dresden (DE); POLLMANN, Katrin, 01324 Dresden (DE); RAFF, Johannes, 01833 Stolpen (DE); GUTZMER, Jens, 09599 Freiberg (DE)
(74) Vertreter: Kailuweit & Uhlemann Patentanwälte Partnerschaft mbB
(86) Internationale Anmeldenummer: PCT/EP2014/077539
(87) Internationale Veröffentlichungsnummer: WO 2015/091256

(56) Entgegenhaltungen:
- CN-A- 102 703 687
- US-A1- 2011 031 100
- US-A1- 2012 308 531
- K.SASAKI ET ALL: "Spectroscopic analysis of the bioleaching of chalcopyrite by Acidithiobacillus caldus", HYDROMETALLURGY, Nr. 127-128, 3. August 2012 (2012-08-03), Seiten 116-120, XP002739158,
- J-W.CHIEN ET ALL: "Leaching of nickel-molybdenum sulfide ore in membrane biological reactor", TRANSACTIONS OF NONFERROUS METALS SOCIETY OF CHINA, Bd. 21, 2011, Seiten 1395-1401, XP002739159,

## Beschreibung

Die vorliegende Erfindung betrifft die Gewinnung von Metallen aus primären und sekundären Rohstoffen, basierend auf der Nutzung von organischen Säuren und anderen mikrobiellen Metaboliten.

Werden Mikroorganismen zur Gewinnung von Metallen aus Erzen genutzt, so spricht man von Bioleaching (Biolaugung). Metalle die auf diese Art gewonnen werden können, sind beispielsweise Kupfer, Zink, Kobalt, Nickel, Gold und Uran.

Üblicherweise werden zur Biolaugung vor allem acidophile Mikroorganismen, insbesondere die schwefel- und eisenoxidierenden Bakterien der Gattung Thiobacillus, genutzt. Durch Bakterien der Gattung Thiobacillus werden schwerlösliche sulfidische Metallverbindungen über biochemische Oxidationsreaktionen in wasserlösliche Sulfate überführt, gleichzeitig wird Schwefelsäure produziert.

DE 198 36 078 (A1) beschreibt ein Verfahren zur mikrobiellen Laugung von sulfidhaltigen Materialien, insbesondere von Sulfiderzen wie z. B. Pyrit, Markasit, Chalkopyrit, Bornit oder Covellin, mit Hilfe von Mikroorganismen der Gattung Thiobacillus, das dadurch gekennzeichnet ist, dass der wässrigen Laugungsflüssigkeit schwefelhaltige Aminosäuren oder deren Derivate zugesetzt werden.

EP 0 891 304 (B1) betrifft ein Verfahren zur mikrobiologischen Laugung von schwermetallhaltigen Schlämmen, bei dem ein oxidierbare Schwefelverbindungen enthaltender schwermetallhaltiger Schlamm mit einem saurem Prozesswasser perkoliert wird und die durch mikrobielle Aktivitäten gelösten Schwermetalle aus dem Prozesswasser abgetrennt werden. Auch hier wird Thiobacillus als biolaugender Mikroorganismus eingesetzt. Zusätzlich wird dem Schlamm im Festbettreaktor vor und/oder während der mikrobiellen Laugung Schwefel zugemischt.

DE 101 54 904 (B4) betrifft ein Verfahren zur kontrollierten mikrobiellen Laugung von Feststoffen, die mit Schwermetallen kontaminiert sind, in Reaktoren, die nach dem Perkolationsprinzip arbeiten, indem oxidierbare Schwefelverbindungen und/oder elementaren Schwefel enthaltender schwermetallhaltiger Feststoff mit einem wässrigen Medium perkoliert und belüftet wird. Dabei werden die Schwermetalle durch mikrobielle Aktivitäten solubilisiert, die löslichen Schwermetalle aus dem Feststoff ausgewaschen und aus der Wasserphase mit Hilfe üblicher Methoden abgetrennt. Das Verfahren ist dadurch gekennzeichnet, dass während der Laugung die Temperatur des sich durch die mikrobiellen Aktivitäten erwärmenden Feststoffs über den Perkolationsstrom des wässrigen Mediums und den Volumenstrom der Belüftung im Reaktor auf den Bereich der maximalen Aktivität der jeweiligen laugungsaktiven Mikroorganismen geregelt wird.

DD 249 156 (A3) betrifft ein Verfahren zur mikrobiellen Laugung von seltene Erdmetalle enthaltenden Phosphatmineralien wie Apatiten, Phosphoriten sowie den daraus zu gewinnenden Abprodukten bei der Düngemittelherstellung und Phosphorproduktion. Dabei wird mittels acidophiler methylotropher Mirkoorganismen auf der Basis von Glucose oder glucosehaltiger technischer oder landwirtschaftlicher Abprodukte hergestellte Gluconsäure in wässriger Lösung mit dem Laugungsmaterial intensiv in Kontakt gebracht.

In EP 2 324 118 (B1) wird ein Verfahren zur Gewinnung von Phosphor aus schwermetall- und phosphathaltigen Feststoffen offenbart. Dazu werden schwermetall- und phosphorhaltige Feststoffe mit Mikroorganismen, die laugungsaktive und polyphosphatspeichemde Mikroorganismen umfassen, unter sauren aeroben Bedingungen behandelt. Der Phosphor wird letztendlich an der Biomasse angereichert und mit der gesamten Biomasse abgetrennt. Acidithiobacillus Spezies wie *Acidithiobacillus thiooxidans* und *Acidithiobacillus ferrooxidans* werden als besonders bevorzugte laugungsaktive Mikroorganismen hervorgehoben.

K. Sasaki et. al: "Spectroscopic Analysis of the bioleaching of chalcopyrite by Acidithiobacillus caldus", Hydrometallurgy, Nr 127 - 128, 3. August 2012, S. 116 - 120 D1 beschreibt ein Verfahren zum Bioleaching von Chalcopyrit (CuFeS₂) mit Hilfe von *Acidithiobacillus caldus* Kulturen. Offenbart ist u.a. ein Experiment zum Herauslösen der Metallionen, bei dem eine Trennung von Mikroorganismen und Chalcopyrit-Suspension durch eine Dialysemembran vorgenommen wird. Die Mikroorganismen oxidieren den durch die Membran hindurch diffundierenden Schwefel zu Schwefelsäure und verhindern damit eine Passivierung der Chalcopyrit-Oberfläche durch Ablagerungen von Schwefel.

Allen genannten Beispielen gemein ist die Verwendung acidophiler Mikroorganismen und deren räumliche Nähe zu den zu laugenden Materialien.

Bei der Laugung von Metallen und seltenen Erden aus primären und/oder sekundären Rohstoffen mit einem hohen Carbonatgehalt und/oder einem hohen Anteil an organischen bitumenähnlichen Materialien hat sich die Verwendung acidophiler Mikroorganismen als problematisch erwiesen, da ein hoher Anteil an organischen Kohlenstoffen nicht zu deren optimalen Milieubedingungen zählt.

Auch die Verwendung heterotropher Mikroorganismen ist bekannt, beispielsweise aus EP 1 179 604 (A2) oder aus US 5,021,088 (A). Hier wird jedoch, genau wie bei Methoden, welche acidophile Mikroorganismen verwenden, ein direkter Kontakt der Mikroorganismen mit dem zu laugenden Material hergestellt. Das resultiert nicht nur in aufwendige Abtrennverfahren der so gewonnenen Metalle von der Biomasse, sondern auch in der Ausbildung von Biofilmen und/oder Passivierungsschichten auf dem zu laugenden Material, was wiederum die Ausbeute stark verringert.

CN 102 703 687 A offenbart einen Reaktor zur selektiven Laugung von Mineralien durch Bakterien. Der Reaktor wird von einem Hohlzylinder gebildet, welcher im Inneren über eine kubische Kammer für die zu laugenden Materialien verfügt. Diese Kammer ist über eine Mikrofilter-Membran aus Glasfasermaterial von einer Zwischenkammer getrennt, in welche das Bakterien enthaltende Medium eingebracht wird. Über ein Wasserbad- Ummantelung an der Reaktorwand und eine Temperatur-Kontrolleinheit kann die Temperatur innerhalb des Reaktors konstant gehalten werden. Die Mikrofiltermembran weist Porengrößen von 0.5 - 20 µm auf und ist damit durchlässig für Metallionen und Metallpartikel

US 2012/0308531 A1 offenbart ein Verfahren zur Herstellung von Zellen unter der Verwendung von Hohlfaser - Reaktoren. Diese hohlen Fasern umfassen eine Faser-Wand, welche permeabel für Nährstoffe, Gase und zelluläre Abfallprodukte, nicht jedoch für Zellen ist. Somit können innerhalb der Faser Zellen gezüchtet werden, wobei ihnen permanent Nährstoffe und Gase, wie beispielsweise Sauerstoff, zugeführt werden. Die Zellen können dadurch besonders dicht wachsen und beispielsweise für Gewebe gezüchtet werden. Die Faserwand weist Poren auf welche Gase und Nährstoffe sowie Zellabfallprodukte hindurch migrieren lassen. Die poröse Wand ist selektiv gegenüber der Größe der Stoffteilchen, nicht gegenüber deren Hydrophobizität.

US 2011/0031100 A1 offenbart Komposit-Membranen für die Membran-Destillation. Diese weisen sowohl hydrophile als auch hydrophobe Schichten auf und sind so konstruiert, dass sie einen hohen Dampfdurchfluss ermöglichen. Die Selektion der Stoffe, welche die Membran durchdringen können, nach deren Hydrophilie bzw. Hydrophobizität, nicht nach deren Größe.

Aufgabe der vorliegenden Erfindung ist somit, ein vorteilhaftes neues Verfahren und die entsprechende Vorrichtung zur Verfügung zu stellen, welches die Gewinnung von 2- und 3-wertigen Metallionen aus primären und sekundären Rohstoffen mit Hilfe von mikrobiellen Metaboliten und unter räumlicher Trennung von Rohstoffen und Mikroorganismen erlaubt.
Die vorliegende Erfindung erlaubt die biohydrometallurgische Gewinnung von Metallen aus nicht sulfidischen Erzen ohne zusätzliche Zugabe von Schwefel- und Eisenverbindungen. Die Verwendung von mikrobiell produzierten organischen Säuren und Komplexbildnern/Chelatoren ermöglicht Verfahren mit zellhaltigen als auch mit zellfreien Lösungen. Verfahren mit zellhaltigen Lösungen kombinieren die Wirkung der Metabolite mit dem Einfluss von Mikroorganismen und werden mikrobiell katalysiert. Verfahren mit zellfreien Lösungen sind unabhängig von mikrobieller Aktivität und somit besonders für die Aufbereitung von Ressourcen mit toxischen Inhaltsstoffen geeignet.

Die Aufgabe wird gelöst durch eine Vorrichtung zur Gewinnung von 2- und/oder 3-wertigen Metallionen aus primären und/oder sekundären Rohstoffen gemäß Anspruch 1.
Weitere Ausgestaltungen der Erfindung finden sich in den Unteransprüchen 2 bis 5.

Die erfindungsgemäße Vorrichtung enthält:
a. ein Kompartiment, enthaltend ein heterogenes Gemisch aus einem oder mehreren primären und/oder sekundären Rohstoffen mit einer wässrigen Lösung,
b. ein zweites Kompartiment, welches vom ersten Kompartiment durch eine Membran abgetrennt ist,
wobei das zweite Kompartiment Mikroorganismen oder einen Kulturüberstand dieser Mikroorganismen enthält.

Das zweite Kompartiment b. ist bevorzugt so ausgestaltet, dass es sich für die Kultivierung von aeroben Mikroorganismen eignet.

Die erfindungsgemäße Vorrichtung kann selbstverständlich mehrere Kompartimente vom Typ a. und/oder b. enthalten, beispielsweise ist eine Anordnung a.b.a oder auch b.a.b möglich, wobei jeweils zwischen a. und b. eine Membran angebracht ist.

Erfindungsgemäß sind in dem durch die Membran abgetrennten ersten Kompartiment (a.) ein heterogenes Gemisch aus einem oder mehreren (metallhaltigen) primären und/oder sekundären Rohstoffen in einer wässrigen Lösung. Die primären Rohstoffe sind bevorzugt ausgewählt aus tonhaltigen Materialien, Erzen mit einem Mindestgehalt an Carbonat von bevorzugt 20%, besonders bevorzugt 15 %, Erzen, welche seltene Erden enthalten und/oder Chalkopyrit. Sekundäre Rohstoffe sind bevorzugt ausgewählt aus Elektronikschrott, Lampenpulver, Leuchtpulver, Straßenstaub, Filterasche, Schlacke.

Bevorzugt sind in dem durch die Membran abgetrennten zweiten Kompartiment (b.) heterotrophe Mikroorganismen, besonders bevorzugt heterotrophe Bakterien enthalten. Die verwendeten Mikroorganismen sind bevorzugt aerob und gram-positiv. Besonders bevorzugt werden Mikroorganismen verwendet, die einen ausgeprägten Hang zum overflow-Metabolismus aufweisen, bei dem bei einer Disbalance von Nährstoffen vermehrt Tricarbonsäuren in das umgebende Milieu abgegeben werden. Bevorzugt werden die Gattungen *Bacillus* und *Lysinibacillus* verwendet, besonders bevorzugt die Stämme *Lysinibacillus sphaericus* JG-A12 und *Bacillus sp.* JG-B12.

Als heterotrophe Mikroorganismen können auch Pilze oder Hefen, bevorzugt solche, welche aus einer metallhaltigen Umgebung isoliert wurden, verwendet werden. Besonders bevorzugt wird *Schizophyllum commune, Aspergillus niger, Penicillium purpurogenum* oder *Rhodotorula rubra* verwendet.

Im dem zweiten, durch die Membran abgetrennten Kompartiment liegen die Mikroorganismen bevorzugt in einem zur Kultivierung des jeweiligen verwendeten Mikroorganismus' geeigneten Nährmedium vor. Das Nährmedium enthält eine von dem jeweiligen Mikroorganismus verwertbare Energiequelle sowie die von ihm benötigten Nährstoffe.

Die verwendeten Mikroorganismen zeichnen sich vor allem dadurch aus, dass sie Komplexbildner wie Chelatoren, Glutaminsäure, Citronensäure, Isocitronensäure, Tricarbonsäure, Essigsäure, Propionsäure oder Buttersäure freisetzen. Chelatoren sind beispielsweise Siderophore und Chalkophore.

Die Interaktion der Metalle mit den mikrobiellen Metaboliten erfolgt über die Verschiebung des pH-Wertes und die Komplexolyse. Diese Vorgänge führen zu einer Freisetzung der Metalle aus den Ressourcen. Auf diese Weise sollen gering konzentrierte beziehungsweise fein dispers verteilte Metalle oder Metalloide aus Ressourcen mobilisiert werden.
Diese Komplexbildner bilden Komplexe mit den in den primären und sekundären Rohstoffen vorhandenen Metallen und bewirken somit die Freisetzung von 2- und/oder 3-wertigen Metallionen, welche anschließend abgetrennt werden können.

Die biotechnologische Herstellung von Chelatoren in reiner Form ist zum Zeitpunkt der Anmeldung nur sehr aufwendig möglich, bzw. extrem kostenintensiv. Vorteilhafterweise müssen die Chelatoren zur Anwendung in der erfindungsgemäßen Vorrichtung nicht in Reinstform vorliegen, sondern genügen zum Vorgang des Bioleaching in ihrer von den Mikroorganismen abgegebenen Form. Dies macht das erfindungsgemäße Verfahren deutlich weniger aufwendig und kostenintensiv.

Alternativ zu Mikroorganismen können in das zweite, durch die Membran abgetrennte Kompartiment auch ein Kulturüberstand mit Komplexbildner ausgewählt aus Chelatoren, Glutaminsäure, Citronensäure, Isocitronensäure, Gluconsäure, Milchsäure und Propionsäure eingebracht werden.

Kulturüberstand meint die aus einer flüssigen Mikroorganismenkultur durch beispielsweise Zentrifugation oder Filtration abgetrennte flüssige, zellfreie Phase, welche unter anderem die Komplexbildner enthält. Dieser Kulturüberstand kann nach seiner Gewinnung auch eingetrocknet und vor der Verwendung in einer erfindungsgemäßen Vorrichtung wieder verflüssigt werden.

Die Membran, welche die beiden Kompartimente voneinander trennt, ist erfindungsgemäß eine semipermeable Membran. Die Membran (insbesondere in der Richtung Kompartiment b. → Kompartiment a.) ist so aufgebaut, dass sie für Mikroorganismen unpassierbar ist, jedoch für Komplexbildner, insbesondere die oben erwähnten organischen (insbesondere von Kompartiment b. in Richtung Kompartiment a.) passierbar. Die Membran weist in der Richtung Kompartiment b. (Kompartiment mit Zelle bzw. Komplexbildner) bevorzugt moderat hydrophilen Materialien mit Poren in einem Größenbereich von 0,01 bis 0,1 µm auf. Bevorzugte Materialien in der Grenzschicht zu Kompartiment b. sind ausgewählt aus Zellulose, regenerativer Zellulose, Zellulosenitrat, Zelluloseacetat, Zellulosetriacetat, Polyvinylalkohol und Polyethersulfon. Bevorzugte Materialien in der Grenzschicht zu Kompartiment a. (welche bevorzugt als Stützschicht dient) sind hydrophobe Polymere, wie z. B. Polyamid, Polyamidimid, Polyimid, Polypropylen, Polytetrafluorethylen (PTFE), Polyvinylidenflourid und Glas.

Die Grenzschicht zu Kompartiment b. weist erfindungsgemäß symmetrische Poren in einem Größenbereich von 0,01 bis 0,1 µm auf. Die Grenzschicht zu Kompartiment b. weist ebenfalls Poren auf die mit diesen Poren verbunden sind. Die Porengröße spielt hier eine geringere Rolle. Bevorzugt sind die Poren größer als 0,3 µm und können Durchmesser bis zu 2 mm aufweisen. Besonders bevorzugt wird zum Beispiel regenerative Cellulose auf einer PolyamidStützschicht als Membran verwendet. Durch die Membran gelangen Komplexbildner aus dem Innenraum des zweiten, durch die Membran abgetrennten Kompartiments in das erste Kompartiment a., welches das heterogene Gemisch aus primären und/oder sekundären Rohstoffen mit einer wässrigen Lösung enthält, und bewirken dort durch Komplexbildung die Freisetzung von 2- und/oder 3-wertigen Metallionen, welche anschließend abgetrennt werden können.

Bei Verwendung einer Membran gelangen die so herausgelösten 2- und/oder 3-wertigen Metallionen bevorzugt nicht mehr oder nur in geringem Umfang in das zweite, durch die Membran abgetrennte Kompartiment b. und können im weiteren Verfahren einfach abgetrennt werden. Vorteilhafterweise können die Metallionen so nicht von den Mikroorganismen aufgenommen werden. Die Wanderung von aus den Rohstoffen herausgelösten Metallionen in das Kompartiment b. wird vorteilhaft durch die hydrophobe Grenzschicht zu Kompartiment a. unterdrückt.

Wird eine (stärker) permeable Membran verwendet, die es den 2- und/oder 3-wertigen Metallionen erlaubt, in den Innenraum des zweiten, durch die Membran abgetrennten Kompartiments zu gelangen, so erfolgt bevorzugt ein weiterer Schritt zur Abtrennung der Metallionen von den verwendeten Mikroorganismen. Bevorzugt werden die Metallionen dann durch Elektrolyse oder Flotation von den Mikroorganismen abgetrennt.

Die Membran wird bevorzugt durch einen stabilisierenden Träger, bevorzugt ein Kunststoff-, oder Kohlenstoffgitter stabilisiert.

Durch die räumliche Trennung von Mikroorganismen und primären und/oder sekundären Rohstoffen wird unter anderem die Ausbildung einer Passivierungsschicht und eines Biofilmes verhindert. Zudem können die gelösten 2- und/oder 3-wertigen Metallionen nicht von den Mikroorganismen aufgenommen werden und es kann keine Bindung, Sorption oder Mineralbildung auf der Zelloberfläche stattfinden.
Das heterogene Gemisch aus einem oder mehreren primären und/oder sekundären Rohstoffen mit einer wässrigen Lösung weist bevorzugt einen pH-Wert von pH 5 bis pH 8,5, besonders bevorzugt von pH 5,5 bis pH 8 auf. Dieser pH-Bereich hat sich als besonders geeignet für das Wachstum der heterotrophen Mikroorganismen herausgestellt.

Bei der wässrigen Lösung, mit welcher die primären und/oder sekundären Rohstoffe gemischt vorliegen, handelt es sich bevorzugt um Wasser. Alternativ liegt das gleiche Nährmedium vor, welches sich auch im Innenraum des zweiten, durch die Membran abgetrennten Kompartiments befindet.

Die Vorrichtung kann zur Durchführung des Verfahrens als Batchverfahren oder als Durchströmverfahren ausgestaltet sein. Bevorzugt wird das heterogene Gemisch während der Inkubation mit dem zweiten, durch die Membran abgetrennten Kompartiment ständig in Bewegung gehalten. Dies kann beispielsweise über einen Rührer, Schüttler, oder den gleichen Zweck erfüllende Vorrichtungen erfolgen. Alternativ wird ein oder werden beide Kompartimente der Vorrichtung jeweils mit einer wässrigen Lösung durchströmt. Bevorzugt werden beide Kompartimente parallel oder auch im Gegenstrom unabhängig voneinander, d. h. in 2 getrennten Kreisläufen, kontinuierlich (oder semi-kontinuierlich oder auch diskontinuierlich) durchströmt. Der eine Kreislauf (nachfolgend "biologischer Kreislauf") steht mit dem Kompartiment enthaltend Mikroorganismen oder einen Kulturüberstand oder einen oder mehrere Komplexbildner in Verbindung und ermöglicht die, bevorzugt kontinuierliche, Erneuerung der Mikroorganismen (bzw. des Kulturüberstand oder der Komplexbildner).

Die Vorrichtung enthält bevorzugt einen weiteren Behälter zur Aufzucht der Mikroorganismen, der bevorzugt mit dem aus denen, bevorzugt kontinuierlich, neue Mikroorganismen oder Kulturüberstand entnommen werden kann. Dieser Behälter ist bevorzugt im biologischen Kreislauf mit dem Kompartiment b über Zuleitungen verbunden. Der biologische Kreislauf enthält bevorzugt noch einen Behälter zur Abtrennung verbrauchter Biomasse.

Der bevorzugt zweite Kreislauf (nachfolgend "Rohstoff-Kreislauf") steht mit dem mit dem Kompartiment enthaltend die primären und/oder sekundären Rohstoffe in Verbindung und ermöglicht das, bevorzugt kontinuierliche, Abtrennen von komplexierten Metallionen (z. B. durch Ausfällen oder Elektrolyse) und damit eine Gleichgewichtsverschiebung. Die Vorrichtung enthält bevorzugt einen weiteren Behälter zum Abtrennen von komplexierten Metallionen, z. B. einen Fällungsbehälter oder eine Elektrolysekammer Dieser Behälter ist bevorzugt im Rohstoff-Kreislauf mit dem Kompartiment a über Zuleitungen verbunden. Ebenfalls möglich ist die abwechselnde Anordnung und Durchströmung mehrerer Kompartimente in Reihe oder eine ineinander aufgerollte Anordnung der Kompartimente.

Die primären Rohstoffe sind bevorzugt ausgewählt aus tonhaltigen Materialien, Erzen mit einem Mindestgehalt an Carbonat von bevorzugt 20%, besonders bevorzugt 15 %, Erzen, welche seltene Erden enthalten und/oder Chalkopyrit.

Sekundäre Rohstoffe sind bevorzugt ausgewählt aus Elektronikschrott, Lampenpulver, Straßenstaub, Filterasche, Schlacke.

Ebenfalls Gegenstand der Erfindung ist ein Verfahren zur Gewinnung von 2- und/oder 3-wertigen Metallionen aus primären und/oder sekundären Rohstoffen, umfassend die Schritte
a. Einstellen des pH-Wertes des heterogenen Gemisches enthaltend ein oder mehrere primären und/oder sekundären Rohstoffen auf pH 5 bis pH 8,5, bevorzugt auf pH 5,5 bis pH 8;
b. Inkubation des heterogenen Gemisches (mit Komplexbildnern) in einer erfindungsgemäßen Vorrichtung unter aeroben Bedingungen bei einer Temperatur von 20 bis 35 °C, bevorzugt von 28 bis 32 °C;
c. Abtrennung der (komplexierten) 2- und/oder 3-wertigen Metallionen (aus dem heterogenen Gemisch).

Das Verfahren eignet sich zur Durchführung als Batchverfahren oder als Durchströmverfahren. Bevorzugt wird das heterogene Gemisch während der Inkubation mit dem Zweiten, durch die Membran abgetrennten Kompartiment ständig in Bewegung gehalten. Dies kann - insbesondere beim Batchverfahren - beispielsweise über einen Rührer, Schüttler, oder den gleichen Zweck erfüllende Vorrichtungen erfolgen. Im Durchströmverfahren wird ein oder werden beide Kompartimente der Vorrichtung jeweils mit einer wässrigen Lösung durchströmt. Bevorzugt werden beide Kompartimente parallel oder auch im Gegenstrom unabhängig voneinander (d. h. in 2 getrennten Kreisläufen) kontinuierlich (oder auch diskontinuierlich) durchströmt. Dies ermöglicht im Kompartiment enthaltend Mikroorganismen oder einen Kulturüberstand oder einen oder mehrere Komplexbildner die, bevorzugt kontinuierliche, Erneuerung der Mikroorgansimen (bzw. des Kulturüberstand oder der Komplexbildner). Die Durchströmung des Kompartimentes a. enthaltend die primären und/oder sekundären Rohstoffe ermöglicht das, bevorzugt kontinuierliche, Abtrennen von komplexierten Metallionen (z. B. durch Ausfällen) und damit eine Gleichgewichtsverschiebung.

Auch eine Kombination aus Batchverfahren und Durchströmverfahren ist möglich, d. h. nur ein Kompartiment wird im Kreislauf durchströmt und im andere erfolgt die Inkubation im Batchverfahren.

Ebenfalls möglich ist die abwechselnde Anordnung und Durchströmung mehrerer Kompartimente in Reihe oder eine ineinander aufgerollte Anordnung der Kompartimente. Die Abtrennung der (komplexierten) 2- und/oder 3-wertigen Metallionen aus dem heterogenen Gemisch erfolgt bevorzugt durch ein Verfahren ausgewählt aus Elektrolyse, Flotation, Fällung, lonenaustausch.

Gegenstand der Erfindung ist auch die Verwendung einer erfindungsgemäßen Vorrichtung zur Gewinnung von 2- und/oder 3-wertigen Metallionen aus primären und/oder sekundären Rohstoffen.

Bevorzugte Ausgestaltungen der Vorrichtung sind weiter oben beschrieben.

Die Erfindung soll im Folgenden durch einige Ausführungsbeispiele und Figuren näher erläutert werden, ohne dabei auf diese beschränkt zu sein.
Fig. 1 zeigt eine schematische Darstellung einer erfindungsgemäßen Vorrichtung.
Fig. 2 zeigt die Gehalte an Gadolinium (Gd), Terbium (Tb) und Europium (Eu) im Kompartiment, enthaltend ein heterogenes Gemisch aus Leuchtpulver mit Nährmedium, nach 3, 7, 14 und 21 Tagen Inkubation mit mehreren, durch Membranen abgetrennten Kompartimenten enthaltend *Schizophyllum commune.*

### Ausführungsbeispiel

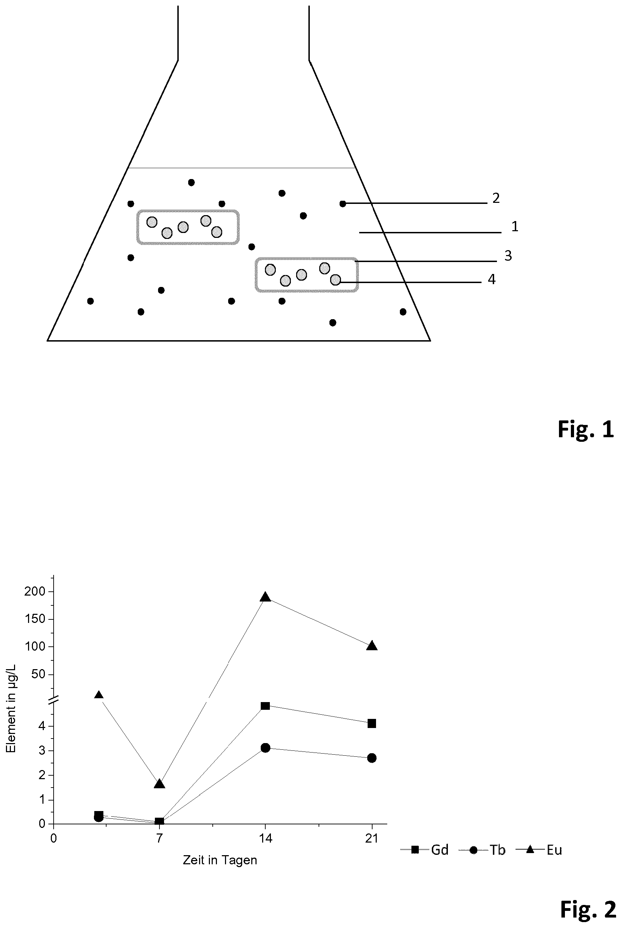

Das folgende Ausführungsbeispiel ist schematisch in Fig. 1 dargestellt. In 300 ml Erlenmeyerkolben werden 100 ml Nährmedium und 0,1 g Leuchtpulver gegeben. Für das Nährmedium werden je Liter 2 g Trypticase Pepton, 2 g Hefeextrakt, 0.5 g MgSO₄x7H₂O, 0.5 g KH₂PO₄, 1.0 g K₂HPO₄ und 20 g Glucose abgewogen, in Wasser gelöst und sterilisiert. Die Glucose wird dabei bevorzugt gesondert sterilisiert.

Nährmedium mit Leuchtpulver (2) bildet den exomembranalen Raum (1). Zwei Membransäcke (3) - hier aus regenerierter Zellulose in Richtung exomembranaler Raum auf einer Polyamidstützschicht - mit jeweils 10 ml *Schizophyllum commune* Kultur (4) werden in den Erlenmeyerkolben gegeben. Die verwendete Membran hat eine Ausschlussgrenze von 50 kDa. Die Inkubation erfolgt auf einem Horizontalschüttler bei 300 rpm und 30°C. Die Probennahmen erfolgt nach 3, 7, 14 und 21 Tagen.

Es werden jeweils 10 ml Probe aus dem exomembranalen Medium entnommen. Diese werden bei 15.000 g für 20 min zentrifugiert. Das Pellet wird bei 105 °C getrocknet bis es die Massenkonstanz erreicht hat. In der Kulturbrühe (Überstand aus der Zentrifugation) und dem getrockneten Pellet werden mittels ICP-MS die Gehalte an Seltenen Erden bestimmt.

Des Weiteren werden pro Probenahme-Tag aus jedem intramembranalen Kompartiment jeweils eine Probe genommen. Diese werden bei 15.000 g für 20 min zentrifugiert. Das Pellet wird bei 105 °C getrocknet bis es die Massenkonstanz erreicht hat. In der Kulturbrühe (Überstand aus der Zentrifugation) und dem getrockneten Pellet werden mittels ICP-MS die Gehalte an Seltenen Erden bestimmt.

Die Ergebnisse der ICP-MS aus dem exomembranalen Raum sind in Fig. 2 dargestellt. Es ist deutlich zu erkennen, dass im Zeitraum von Tag 7 bis Tag 14 die Gehalte an Gadolinium (Gd), Terbium (Tb) und Europium (Eu) im exomembranalen Raum deutlich ansteigen, woraus geschlussfolgert werden kann, dass die von *Schizophyllum commune* abgegebenen Metabolite zu einer Laugung dieser seltenen Erden aus dem Leuchtpulver führen.

### Bezugszeichenliste

1 - exomembranaler Raum / Kompartiment, enthaltend ein heterogenes Gemisch aus einem oder mehreren primären und/oder sekundären Rohstoffen mit einer wässrigen Lösung
2 - primärer und/oder sekundärer Rohstoff, z. B. Leuchtpulver
3 - Membrankompartiment
4 - Mikroorganismus, z. B. *Schizophyllum commune*

## Patentansprüche

1. Vorrichtung zur Gewinnung von 2- und/oder 3-wertigen Metallionen aus primären und/oder sekundären Rohstoffen, enthaltend
a. ein Kompartiment, enthaltend ein heterogenes Gemisch aus einem oder mehreren primären und/oder sekundären Rohstoffen mit einer wässrigen Lösung
b. ein zweites Kompartiment mit aeroben Bedingungen, welches vom ersten Kompartiment durch eine semipermeable Membran abgetrennt ist,
wobei das zweite Kompartiment aerobe Mikroorganismen, die Komplexbildner freisetzen, oder einen Kulturüberstand dieser Mikroorganismen enthält, wobei die Komplexbildner ausgewählt sind aus Chelatoren, Glutaminsäure und anderen niedermolekularen organischen Säuren, ausgewählt aus Citronensäure, Isocitronensäure, Tricarbonsäure, Essigsäure, Propionsäure, Buttersäure, Milchsäure,
wobei die semipermeable Membran so aufgebaut ist, dass sie für Metallionen und Mikroorganismen unpassierbar und für die Komplexbildner passierbar ist, wobei die Materialien in der Grenzschicht der Membran zu Kompartiment a. hydrophobe Polymere sind, wobei die Membran in Richtung Kompartiment b. moderat hydrophile Materialien mit Poren in einem Größenbereich von 0,01 bis 0,1 µm aufweist, wobei die moderat hydrophilen Materialien ausgewählt sind aus Zellulose, regenerativer Zellulose, Zellulosenitrat, Zelluloseacetat, Zellulosetriacetat, Polyvinylalkohol und Polyethersulfon, wobei die Mikroorganismen Pilze und/oder Hefen und/oder heterotrophe Bakterien sind.

2. Vorrichtung nach Anspruch 1, **dadurch gekennzeichnet, dass** die Mikroorganismen Pilze und/oder Hefen, welche aus einer metallhaltigen Umgebung isoliert wurden, sind.

3. Vorrichtung nach Anspruch 2, **dadurch gekennzeichnet, dass** die Mikroorganismen *Schizophyllum commune* sind.

4. Vorrichtung nach einem der vorhergehenden Ansprüche, **dadurch gekennzeichnet, dass** das heterogene Gemisch einen pH-Wert von pH 5 bis pH 8,5 aufweist.

5. Vorrichtung nach einem der vorhergehenden Ansprüche, **dadurch gekennzeichnet, dass** primäre Rohstoffe ausgewählt sind aus tonhaltigen Materialien, Erzen mit einem Mindestgehalt an Carbonat von 20%, Erzen, welche seltene Erden enthalten und/oder Chalkopyrit.

6. Verfahren zur Gewinnung von 2- und/oder 3-wertigen Metallionen aus primären und/oder sekundären Rohstoffen, umfassend die Schritte
a. Einstellen des pH-Wertes des heterogenen Gemisches enthaltend ein oder mehrere primären und/oder sekundären Rohstoffen auf pH 5 bis pH 8,5,
b. Inkubation des heterogenen Gemisches in einer Vorrichtung nach einem der Ansprüche 1 bis 5 unter aeroben Bedingungen bei einer Temperatur von 20 bis 35 °C,
c. Abtrennung der 2- und/oder 3-wertigen Metallionen.

7. Verfahren nach Anspruch 6, **dadurch gekennzeichnet, dass** die Abtrennung der 2- und/oder 3-wertigen Metallionen durch ein Verfahren ausgewählt aus Elektrolyse, Flotation, Fällung, lonenaustausch erfolgt.

8. Verwendung einer Vorrichtung nach einem der Ansprüche 1 bis 5 zur Gewinnung von 2- und/oder 3-wertigen Metallionen aus primären und/oder sekundären Rohstoffen.

## Claims

1. Apparatus for recovering bivalent and/or trivalent metal ions from primary and/or secondary raw materials, comprising
a. a compartment containing a heterogeneous mixture of one or more primary and/or secondary raw materials with an aqueous solution
b. a second compartment with aerobic conditions, separated from the first compartment by a semi-permeable membrane,
wherein said second compartment contains aerobic microorganisms releasing complexing agents or a culture supernatant of said microorganisms,
wherein said complexing agents are selected from chelators, glutamic acid and other low molecular organic acids selected from citric acid, isocitric acid, tricarboxylic acid, acetic acid, propionic acid, butyric acid, lactic acid,
wherein the semi-permeable membrane is constructed in such a way that it is impermeable for metal ions and microorganisms and permeable for the complexing agents,
wherein the materials in the boundary layer of the membrane to compartment a. are hydrophobic polymers,
wherein the membrane towards compartment b. exhibits moderately hydrophilic materials with pores in a size range of 0.01 to 0.1 µm,
wherein the moderately hydrophilic materials are selected from cellulose, regenerative cellulose, cellulose nitrate, cellulose acetate, cellulose triacetate, polyvinyl alcohol and poyl ether sulfone,
wherein the microorganisms are fungi and/or yeasts and/or heterotrophic bacteria.

2. Apparatus according to claim 1, **characterized in that** the microorganisms are fungi and/or yeasts isolated from a metal-containing environment.

3. Apparatus according to claim 2, **characterized in that** the microorganisms are *Schizophyllum commune.*

4. Apparatus according to any of the preceding claims, **characterized in that** the heterogeneous mixture has a pH value of pH 5 to pH 8.5.

5. Apparatus according to any of the preceding claims, **characterized in that** the primary raw materials are selected from clay-containing materials, ores with a minimum carbonate content of 20%, ores containing rare earths, and/or chalcopyrite.

6. Process for recovering bivalent and/or trivalent metal ions from primary and/or secondary raw materials, comprising the steps of
a. Adjusting the pH value of the heterogeneous mixture containing one or more primary and/or secondary raw materials to pH 5 to pH 8.5,
b. Incubation of the heterogeneous mixture in an apparatus according to one of claims 1 to 5 under aerobic conditions at a temperature of 20 to 35 °C,
c. Separation of the bivalent and/or trivalent metal ions.

7. Process according to claim 6, **characterized in that** the separation of the bivalent and/or trivalent metal ions is carried out by a process selected from electrolysis, flotation, precipitation, ion exchange.

8. Use of an apparatus according to one of claims 1 to 5 for recovering bivalent and/or trivalent metal ions from primary and/or secondary raw materials.

## Revendications

1. Dispositif d'obtention d'ions métalliques divalents et/ou trivalents à partir de matières premières primaires et/ou secondaires, contenant
a. un compartiment contenant un mélange hétérogène d'une ou plusieurs matières premières primaires et/ou secondaires avec une solution aqueuse
b. un second compartiment aux conditions aérobies, lequel est séparé du premier compartiment par une membrane semi-perméable,
le second compartiment contenant des microorganismes aérobies libérant des agents complexants, ou un surnageant de culture de ces microorganismes, les agents complexants étant choisis parmi les agents chélatants, l'acide glutamique et d'autres acides organiques de bas poids moléculaire choisis parmi l'acide citrique, l'acide isocitrique, l'acide tricarboxylique, l'acide acétique, l'acide propionique, l'acide butyrique, l'acide lactique,
la membrane semi-perméable étant constituée de telle manière qu'elle est infranchissable pour les ions métalliques et les microorganismes et franchissable pour les agents complexants, les matériaux de la couche limite de la membrane vers le compartiment a. étant des polymères hydrophobes, la membrane présentant, en direction du compartiment b., des matériaux modérément hydrophiles ayant des pores situés dans une plage de taille de 0,01 à 0,1 µm, les matériaux modérément hydrophiles étant choisis parmi la cellulose, la cellulose régénérative, le nitrate de cellulose, l'acétate de cellulose, le triacétate de cellulose, l'alcool polyvinylique et la polyéthersulfone, les microorganismes étant des champignons et/ou des levures et/ou des bactéries hétérotrophes.

2. Dispositif selon la revendication 1, **caractérisé en ce que** les microorganismes sont des champignons et/ou des levures qui ont été isolés d'un milieu contenant des métaux.

3. Dispositif selon la revendication 2, **caractérisé en ce que** les microorganismes sont *Schizophyllum commune.*

4. Dispositif selon l'une des revendications précédentes, **caractérisé en ce que** le mélange hétérogène présente un pH d'une valeur allant de 5 à 8,5.

5. Dispositif selon l'une des revendications précédentes, **caractérisé en ce que** les matières premières primaires sont choisies parmi les matériaux argileux, les minerais à teneur minimale en carbonate de 20 %, les minerais contenant des terres rares et/ou de la chalcopyrite.

6. Procédé d'obtention d'ions métalliques divalents et/ou trivalents à partir de matières premières primaires et/ou secondaires, comprenant les étapes
a. de réglage du pH du mélange hétérogène contenant une ou plusieurs matières premières primaires et/ou secondaires à une valeur allant de 5 à 8,5,
b. d'incubation du mélange hétérogène dans un dispositif selon l'une des revendications 1 à 5 dans des conditions aérobies à une température de 20 à 35 °C,
c. de séparation des ions métalliques divalents et/ou trivalents.

7. Procédé selon la revendication 6, **caractérisé en ce que** la séparation des ions métalliques divalents et/ou trivalents est réalisée par un procédé choisi parmi l'électrolyse, la flottation, la précipitation, l'échange d'ions.

8. Utilisation d'un dispositif selon l'une des revendications 1 à 5 pour l'obtention d'ions métalliques divalents et/ou trivalents à partir de matières premières primaires et/ou secondaires.
